# FASCICULE DE BREVET EUROPEEN

(11) **EP 3 812 548 B1**
(45) Date de publication et mention de la délivrance du brevet: **27.11.2024**
(21) Numéro de dépôt: 20200451.1
(22) Date de dépôt: 07.10.2020
(51) Int. Cl.: F01D 5/14, F04D 29/32, F04D 29/54, F04D 29/68

(54) **ÉTAGE DE COMPRESSEUR DE TURBOMACHINE AYANT UNE PAROI D'EXTRÉMITÉ INTERNE OPTIMISÉE**
KOMPRESSORSTUFE EINER STRÖMUNGSMASCHINE MIT OPTIMIERTER INNENENDWAND
STAGE OF A TURBOMACHINE COMPRESSOR WITH AN OPTIMISED INNER END WALL

(30) Priorité: 25.10.2019 BE 201905738
(43) Date de publication de la demande: 28.04.2021
(73) Titulaire: Safran Aero Boosters SA, 4041 Herstal (BE)
(72) Inventeur: EL HIMER, Mehdi, 4041 Herstal (BE); FRISQUE, Benoît, 4041 Herstal (BE); VALENTIN, Vincent, 4041 Herstal (BE)
(74) Mandataire: Lecomte & Partners

(56) Documents cités:
- EP-A2- 1 126 132
- US-B2- 9 512 727
- HARVEY N. W. ET AL: "Some Effects of Non-Axisymmetric End Wall Profiling on Axial Flow Compressor Aerodynamics: Part II-Multi-Stage HPC CFD Study", PROCEEDINGS OF THE ASME TURBO EXPO 2008 : PRESENTED AT THE 2008 ASME TURBO EXPO, JUNE 9 - 13, 2008, BERLIN, GERMANY, 13 June 2008 (2008-06-13), US, pages 557 - 569, XP055781002, ISBN: 978-0-7918-4316-1, DOI: 10.1115/GT2008-50991
- HARVEY N. W.: "Some Effects of Non-Axisymmetric End Wall Profiling on Axial Flow Compressor Aerodynamics: Part I-Linear Cascade Investigation", PROCEEDINGS OF THE ASME TURBO EXPO 2008 : PRESENTED AT THE 2008 ASME TURBO EXPO, JUNE 9 - 13, 2008, BERLIN, GERMANY, 13 June 2008 (2008-06-13), US, pages 543 - 555, XP055780999, ISBN: 978-0-7918-4316-1, DOI: 10.1115/GT2008-50990
- REHMAN ABDUL ET AL: "Numerical Investigation and Non-Axisymmetric Endwall Profiling of a Turbine Stage", JOURNAL OF THERMAL SCIENCE, KEXUE CHUBANSHE, CN, vol. 28, no. 4, 3 July 2019 (2019-07-03), pages 811 - 825, XP036826645, ISSN: 1003-2169, [retrieved on 20190703], DOI: 10.1007/S11630-019-1154-0

## Description

### Domaine technique

L'invention concerne une géométrie à bosse et à creux dans un passage inter-aubes de compresseur de turbomachine. L'invention a en particulier trait à un étage de compresseur de turbomachine, tel un turboréacteur ou un turbopropulseur d'aéronef.

### Technique antérieure

La demande de brevet EP 3 477 050 A1 divulgue un turboréacteur avec un compresseur comportant une virole tournante ou fixe qui est pourvue d'une bosse et d'un creux dans chaque passage inter-aubes. Ces irrégularités sur la surface de guidage de l'air - aussi appelées « contouring 3D » - permettent d'améliorer l'écoulement du flux et en particulier de limiter le décollement du flux d'air de l'extrados et/ou en pied d'aubes. La bosse et le creux sont axialement alignés et positionnés dans une moitié amont des aubes. Dans ce document n'est considéré qu'une seule rangée d'aubes (statoriques ou rotoriques) et l'accent est mis sur la conception de l'espace inter-aubes. Cependant, si cette conception améliore le flux d'air lors de son passage entre ces aubes, il n'améliore pas nécessairement l'écoulement en amont ou en aval de cette rangée d'aubes.

Le document US 6,017,186 montre un étage de compresseur dans lequel rotor et stator sont munis d'un contouring 3D, essentiellement formé par des portions concaves et aucune axisymétrie de la surface de guidage de l'air entre deux aubes adjacentes. Une telle conception n'a pas démontré un rendement optimal pour le compresseur.

Un autre étage de compresseur dans lequel rotor et stator sont munis d'un contouring 3D est connu du document suivant en deux parties:
- Harvey N. W.: "Some Effects of Non-Axisymmetric End Wall Profiling on Axial Flow Compresser Aerodynamics: Part I-Linear Cascade Investigation", Proceedings of the ASME Turbo Expo 2008: presented at the 2008 ASME Turbo Expo, June 9 - 13, 2008, Berlin, Germany, 1 janvier 2008 (2008-01-01), pages 543-555, DOI: 10.1115/GT2008-50990, ISBN: 978-0-7918-4316-1, Extrait de l'Internet: http://asmedigitalcollection.asme.org/GT/proceedings-pdf/doi/10.1115/ GT2008-50990/4578938/543_1.pdf, et
- HARVEY N. W. ET AL: "Some Effects of Non-Axisymmetric End Wall Profiling on Axial Flow Compresser Aerodynamics: Part II-Multi-Stage HPC CFD Study", Proceedings of the ASME Turbo Expo 2008: presented at the 2008 ASME Turbo Expo, June 9 - 13, 2008, Berlin, Germany, 1 janvier 2008 (2008-01-01), pages 557-569, DOI: 10.1115/GT2008-50991, ISBN: 978-0-7918-4316-1, Extrait de l'Internet: http://asmedigitalcollection.asme.org/GT/proceedings-pdf/doi/10.1115/ GT2008-50991/4578956/557_1.pdf.

Il existe donc une marge d'amélioration pour l'écoulement du flux d'air dans le compresseur.

### Résumé de l'invention

### Problème technique

L'invention a pour objectif d'optimiser l'écoulement en pied d'aube (débit, pression, décollement, taux de compression) d'un compresseur à l'échelle d'un de ses étages de compression.

### Solution technique

L'invention a pour objet un étage de compresseur selon la revendication 1.

La combinaison d'une irrégularité (bosse ou creux) sur le stator et sur le rotor conduit à un gain en termes d'amélioration de l'écoulement qui est supérieur à la somme des gains obtenus isolément lorsqu'il y a une irrégularité sur le rotor ou bien sur le stator. L'irrégularité sur le rotor augmente le gradient de pression à travers le passage inter-aubes, induisant une plus forte déviation tangentielle (composante tangentielle de la vitesse du flux en sortie du rotor). Ainsi, non seulement le décollement du flux en pied d'aubes rotoriques est réduit mais aussi le flux est « préparé » à parcourir le stator. Du côté stator, l'irrégularité atténue le gradient de pression à travers le passage inter-aubes en accélérant l'écoulement sur l'intrados et en le décélérant sur l'extrados. Ceci facilite le réalignement axial en sortie de l'étage rotor+stator. Aussi, l'irrégularité du stator ne « freine » pas le flux d'air en sortie du rotor. Il y a donc un effet doublement positif des deux irrégularités agissant ensemble.

Le support rotorique peut être une virole, un voile de tambour, une plateforme de fixation individuelle d'aube, ou une portion de disque ou de roue aubagé(e).

Le support statorique peut être une virole ou un segment angulaire de virole, un voile de tambour, ou une plateforme de fixation individuelle d'aube.

Par « circonférentiellement adjacente », on entend deux aubes d'une même rangée annulaire d'aubes qui sont directement voisines circonférentiellement.

La valeur de l'extrémum statorique peut être d'environ 40% à 60% de la valeur de l'extrémum rotorique. Optionnellement, cette plage peut être portée à 46-54%. Selon cette conception, le flux est fortement dévié tangentiellement dans le rotor puis sa direction est partiellement compensée dans le stator. La déviation provient notamment de la réduction de la dimension radiale de la veine (du fait de la bosse) qui pour un débit constant augmente la vitesse.

Alternativement, la valeur de l'extrémum rotorique est d'environ 40% à 60% de la valeur de l'extrémum statorique. Optionnellement, cette plage peut être portée à 46-54%. Selon cette conception, le flux est moyennement dévié tangentiellement dans un sens inverse à celui de l'exemple précédent, puis sa direction est surcompensée dans le stator.

Selon des modes avantageux de l'invention, l'étage de compresseur peut comprendre une ou plusieurs des caractéristiques additionnelles suivantes selon les combinaisons définies par les revendications dépendantes:
- le sommet de la bosse du support rotorique et le sommet de la bosse du support statorique sont agencés à une distance axiale des bords d'attaques des aubes respectives comprise entre 25 et 50% de la corde des aubes respectives, préférentiellement les distances axiales des sommets des bosses du support rotorique et du support statorique par rapport aux bords d'attaque respectifs sont égales en proportion de la corde des aubes respectives. Alternativement, les distances relatives proportionnelles sont différentes entre le support rotorique et le support statorique. Dans les deux cas, les deux sommets peuvent être par exemple à une distance d'environ 25% ou de 40% de leur bord d'attaque, proportionnellement à la corde des aubes respectives. Ceci permet une certaine versatilité dans le choix de la courbure en amont et en aval du sommet. Idéalement, la pente peut être forte en amont du sommet pour forcer le flux d'air à suivre la bosse puis une pente plus douce en aval du sommet évite un décollement. En positionnant le sommet dans le tiers amont (25 à 50%), la bosse peut s'étendre axialement sur une plus longue distance en aval du sommet et ainsi permettre cette pente douce. Une absence de décollement en sortie du rotor permet un meilleur « impact » du flux sur la bosse du stator. Il y a de plus un aspect de réaction car le fait que la bosse de stator soit dans sa partie amont assure une réduction de section radiale dans le stator au voisinage du rotor. Cette réduction renforce aussi l'adhérence du flux sur la pente « douce » du rotor ;
- le creux du support rotorique est accolé à l'intrados d'une aube rotorique et dispose d'un fond positionné axialement à une distance du bord d'attaque de l'aube rotorique d'environ 75% de la corde des aubes rotoriques. Cette valeur peut être comprise entre 60 et 90%. Un creux accolé à l'intrados permet une meilleure progressivité de la géométrie que rencontre le flux (deux surfaces concaves adjacentes, l'intrados et le creux). Cela évite des effets de coin qui seraient créés par une forme trop angulaire (en l'absence de creux : surface axisymétrique convexe rencontrant l'intrados). L'effet de coin est d'autant plus important que le flux est comprimé par l'éventuelle bosse dans la moitié amont du support rotorique. Cette progressivité de la géométrie que rencontre le flux permet également une direction du flux en sortie du rotor mieux contrôlée pour l'entrée dans le stator ;

- la bosse du support rotorique est accolée à l'extrados d'une aube rotorique. L'effet recherché est à rapprocher de ce qui est discuté ci-dessus pour le creux accolé à l'intrados ;
- la bosse du support rotorique s'étend sensiblement d'un bord d'attaque d'une aube rotorique au bord d'attaque d'une aube rotorique circonférentiellement adjacente ;
- la bosse du support statorique est accolée à l'intrados d'une aube statorique et s'étend axialement sur au moins 75%, préférentiellement sur 100%, de la corde des aubes statoriques, le sommet de cette bosse étant préférentiellement accolé à l'intrados de l'aube statorique. Contrairement à l'intrados du rotor (voir ci-dessus), l'intrados du stator « voit » un flux d'air qui a déjà une vitesse tangentielle. Le flux doit être redressé, c'est-à-dire que la composante tangentielle de la vitesse doit être ramenée à zéro. Une bosse au voisinage de, et allant jusqu'à l'intrados limite les turbulences que le « rebond » du flux d'air peut générer. Ces potentielles turbulences sont d'autant plus importantes que la déviation tangentielle résultant des irrégularités du rotor est grande ;
- la valeur de l'extrémum statorique est comprise entre 4 et 8% de la corde des aubes statoriques, et les extrémums valent préférentiellement environ 6% de la corde respective. Ce « facteur de forme » des irrégularités permet de s'assurer un effet suffisant sans que les irrégularités ne forment un obstacle à l'écoulement. On cumule ainsi les meilleurs effets en sortie du rotor pour l'entrée dans le stator et il n'y a pas d'obstacle sur le stator qui perturberaient par réaction l'écoulement dans le rotor ;
- le support rotorique comprend exactement une bosse et exactement un creux, disposés de part et d'autre d'une ligne théorique reliant le bord d'attaque d'une aube donnée et le bord de fuite d'une aube circonférentiellement adjacente, et du côté intrados de ladite aube donnée. Ceci crée une sorte de couloir qui permet une plus forte déviation tangentielle de l'écoulement. Le flux d'air au contact du support rotorique est ainsi dirigé selon une direction qui peut être parallèle à la direction de la corde des aubes statoriques ;
- le creux du support statorique est disposé circonférentiellement à équidistance environ de deux aubes circonférentiellement adjacentes, et préférentiellement axialement à une distance des bords d'attaque des aubes statoriques d'environ 75% de la corde des aubes statoriques. Ce creux permet d'homogénéiser le flux en sortie de l'étage de compression. Il est d'autant plus utile que les déviations tangentielles au niveau du rotor sont grandes ;
- le support statorique est dépourvue de creux et comprend une bosse disposée circonférentiellement environ à équidistance de deux aubes circonférentiellement adjacentes. Ici également, l'homogénéité du flux en sortie de stator est recherchée et en particulier au voisinage des deux aubes, permettant ainsi de bien maîtriser la direction axiale du flux d'air en sortie de l'étage de compression ;
- la bosse du support statorique s'étend de l'extrados d'une aube jusqu'à l'intrados d'une aube circonférentiellement adjacente. Ceci permet de s'assurer d'un flux homogène en sortie de l'étage de compression sur tout l'espace inter-aubes ;
- le creux du support rotorique s'étend circonférentiellement sur environ un quart de la distance inter-aubes. Un creux plus important laisse moins de flexibilité sur la disposition et l'étendue de la bosse. Un creux bien plus faible a moins d'action sur l'écoulement du flux ;
- la hauteur radiale du sommet de la bosse du support rotorique vaut entre 40 et 60% de la profondeur du fond du creux du support rotorique, qui elle-même mesure entre 40 et 60% de la hauteur radiale du sommet de la bosse du support statorique, en valeurs absolues. Ces intervalles montrent des effets sur le rendement du compresseur particulièrement intéressants.

La géométrie du rotor et la géométrie du stator peuvent notamment être obtenues par un procédé de dimensionnement comprenant : le paramétrage d'une pluralité de splines sur le support rotorique, circonférentiellement distribuées et définies chacune par deux points respectifs ; le paramétrage d'une pluralité de splines sur le support statorique, circonférentiellement distribuées et définies chacune par deux points respectifs ; la simulation de l'écoulement de l'air; et une ou plusieurs itérations d'affinage des valeurs des coordonnées des points en fonction des résultats de la simulation.

### Avantages apportés

La conception intégrée de la partie tournante et de la partie fixe de l'étage de compresseur permet d'obtenir une meilleure compression dans le passage inter-aubes. L'association des irrégularités non-axisymétriques sur le rotor et sur le stator directement en aval du rotor permet un effet synergétique d'amélioration de l'écoulement du flux. Des choix précis de bosses ou creux sur le rotor, combinés à des choix précis de bosses ou creux sur le stator, et en particulier leur profondeurs/hauteurs respectives permettent, d'une part, d'augmenter le gradient de pression à travers le passage inter-aubes rotorique, induisant ainsi une plus forte déviation tangentielle de l'écoulement, de l'intrados d'une aube vers l'extrados de sa voisine, et d'autre part, d'atténuer le gradient de pression dans le passage inter-aubes du stator, en accélérant l'écoulement sur l'intrados et en le décélérant sur l'extrados. Ainsi, l'écoulement secondaire est réduit et le réalignement axial de l'écoulement à la sortie du stator est facilité. C'est donc bien la combinaison des bosses et creux du rotor et du stator qui impactent ensemble l'écoulement, mieux qu'il ne serait amélioré par des bosses et creux conçus indépendamment sur le rotor ou le stator.

En effet, il a été observé avec les exemples de conception décrits dans la présente demande, que l'amélioration de l'écoulement lorsqu'à la fois le rotor et le stator directement en aval du rotor sont pourvus d'irrégularités est bien meilleure que l'amélioration combinée d'une turbomachine avec seulement le rotor et d'une turbomachine avec seulement le stator, pourvu d'irrégularités.

### Brève description des dessins

La figure 1 représente une turbomachine axiale.
La figure 2 est un schéma d'un compresseur de turbomachine avec un étage de compresseur selon l'invention.
La figure 3 montre l'étage de compresseur vu depuis un rayon.
Les figures 4 et 5 illustrent un premier mode de réalisation d'un étage de compresseur en vue selon un rayon et en coupe transversale.
Les figures 6 et 7 illustrent un second mode de réalisation d'un étage de compresseur en vue selon un rayon et en coupe transversale.
La figure 8 décrit un procédé selon l'invention.

### Description des modes de réalisation

Dans la description qui va suivre, les termes « interne » et « externe » renvoient à un positionnement par rapport à l'axe de rotation d'une turbomachine axiale. La direction axiale correspond à la direction le long de l'axe de rotation de la turbomachine, les longueurs étant mesurées axialement. Les largeurs sont mesurées selon la circonférence. La direction radiale est perpendiculaire à l'axe de rotation. L'amont et l'aval sont en référence au sens d'écoulement principal du flux dans la turbomachine.

Les dimensions des figures ne sont pas à l'échelle et en particulier les épaisseurs ou les dimensions radiales sont exagérées pour faciliter la lecture des figures.

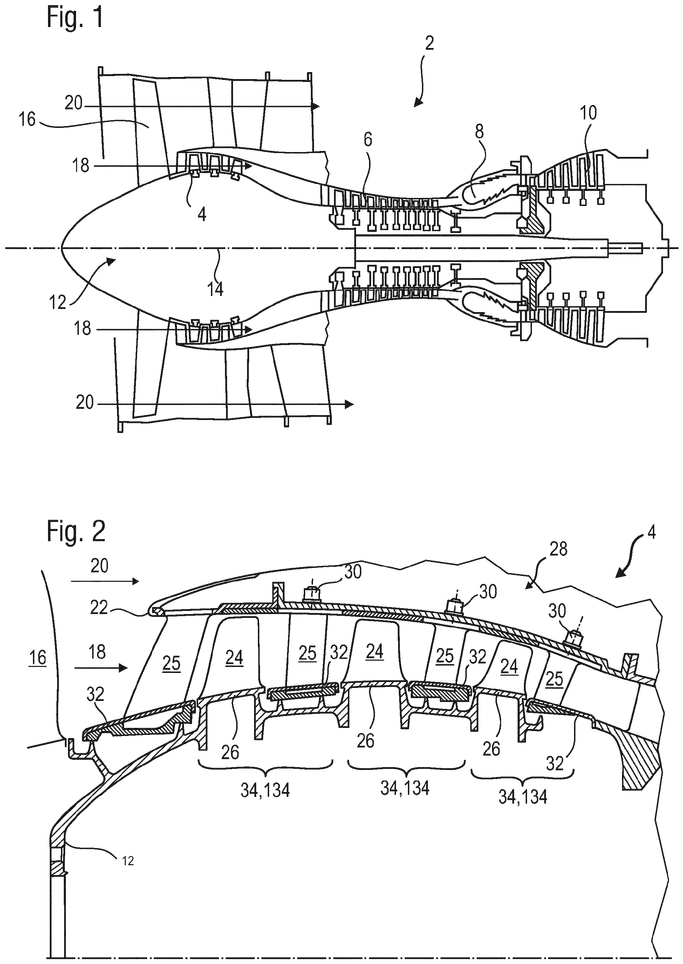

La figure 1 représente de manière simplifiée une turbomachine axiale. Il s'agit dans ce cas précis d'un turboréacteur double-flux. Le turboréacteur 2 comprend un compresseur basse-pression 4, un compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stator. La rotation du rotor autour de son axe de rotation 14 permet ainsi de générer un débit d'air et de comprimer progressivement ce dernier jusqu'à l'entrée de la chambre de combustion 8.

Une soufflante 16, est couplée au rotor 12 et génère un flux d'air qui se divise en un flux primaire 18 et en un flux secondaire 20 traversant un conduit annulaire (partiellement représenté). Le flux secondaire est accéléré pour générer une réaction de poussée utile au vol d'un avion. Les flux primaire 18 et secondaire 20 sont annulaires.

La figure 2 est une vue en coupe d'un compresseur d'une turbomachine axiale telle que celle de la figure 1. Le compresseur peut être le compresseur basse-pression 4. On peut y observer une partie de la soufflante 16 et le bec de séparation 22 du flux primaire 18 et du flux secondaire 20.

Le rotor 12 comprend plusieurs rangées d'aubes rotoriques 24, en l'occurrence trois.

Le compresseur 4 comprend plusieurs redresseurs, en l'occurrence quatre, qui contiennent chacun une rangée d'aubes statoriques 25. Les redresseurs sont associés au fan 16 ou à une rangée d'aubes rotoriques 24 pour redresser le flux d'air, de sorte à convertir la vitesse du flux en pression, notamment en pression statique.

Les aubes rotoriques 24 s'étendent radialement depuis un support rotorique 26 qui peut être une plateforme à queue d'aronde, une couronne interne de tambour monobloc aubagé ou tout autre type de support d'un rotor composite. Les aubes statoriques 25 s'étendent essentiellement radialement depuis un carter extérieur 28. Elles peuvent y être fixées et immobilisées à l'aide d'axes de fixation 30. Elles traversent radialement le flux primaire 18. Les aubes statoriques peuvent être à corde fixe par rapport au carter 28. Avantageusement, les aubes d'une même rangée sont identiques et alignées. Chaque rangée peut comprendre au moins cent aubes 24, 25.

Des supports statoriques 32 sont suspendus aux extrémités internes des aubes statoriques 25. Les supports statoriques 32 peuvent coopérer de manière étanche avec le rotor 12.

Le compresseur comprend trois étages 34 de compression, composés chacun d'une rangée d'aubes rotoriques 24 suivie d'une rangée d'aubes statoriques 25.

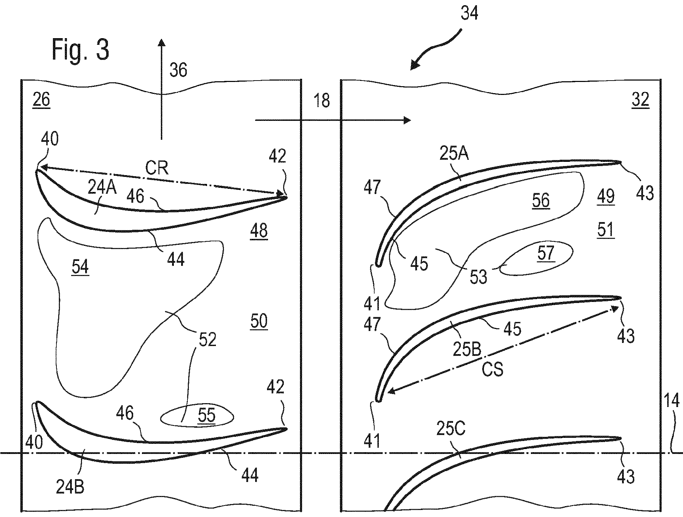

La figure 3 esquisse deux aubes rotoriques 24A, 24B représentatives d'une rangée annulaire d'aubes rotoriques et trois aubes statoriques 25A, 25B, 25C représentatives d'une rangée annulaire d'aubes statoriques, vues radialement depuis l'extérieur.

L'axe de rotation 14 est tracé à une position figurative pour fournir un repère spatial.

Les aubes rotoriques 24 tournent dans le sens indiqué par la flèche 36. La direction générale d'écoulement du flux est indiquée par la flèche 18. Cette direction est donnée comme repère pour cette figure car localement et en particulier entre les aubes rotoriques 24 et les aubes statoriques 25 la direction d'écoulement diffère de la direction 18.

Les aubes rotoriques 24 sont portées par le support 26 et les aubes statoriques 25 sont portées par le support statorique 32. Les aubes 24, 25 ont respectivement un bord d'attaque 40, 41, un bord de fuite 42, 43, un extrados 44, 45 et un intrados 46, 47.

Le support 26 et le support 32 définissent une surface de liaison respective 48, 49, qui guide le flux d'air radialement intérieurement et qui s'étend de l'extrados 44, 45 d'une aube 24A, 25A à l'intrados 46, 47 d'une aube directement circonférentiellement adjacente 24B, 25B. Cette surface de liaison 48, 49 comprend une portion axisymétrique 50, 51 (cylindrique, conique, ellipsoïde, sphérique...) autour de l'axe 14 et une portion non-axisymétrique 52, 53.

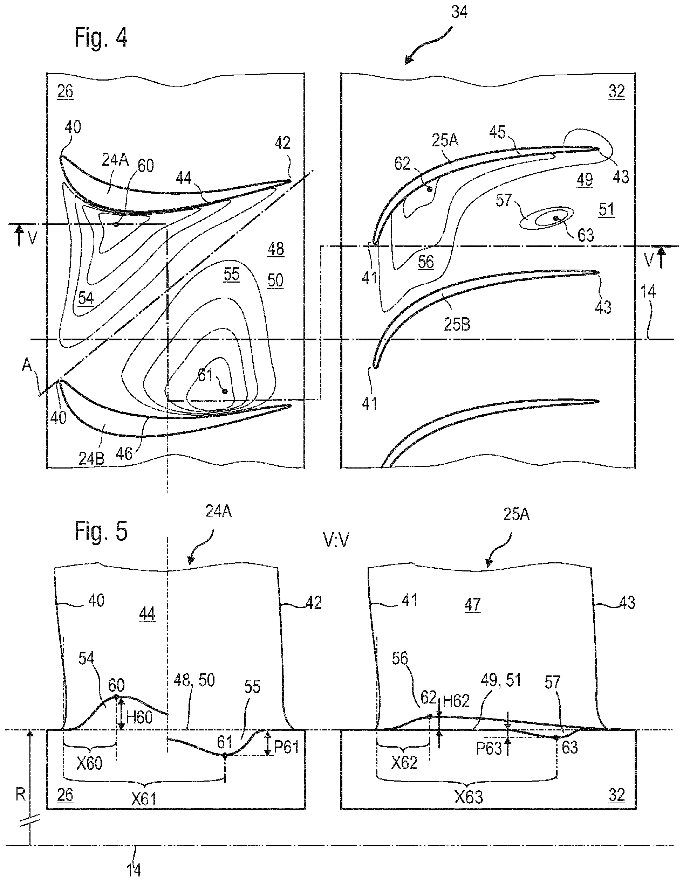

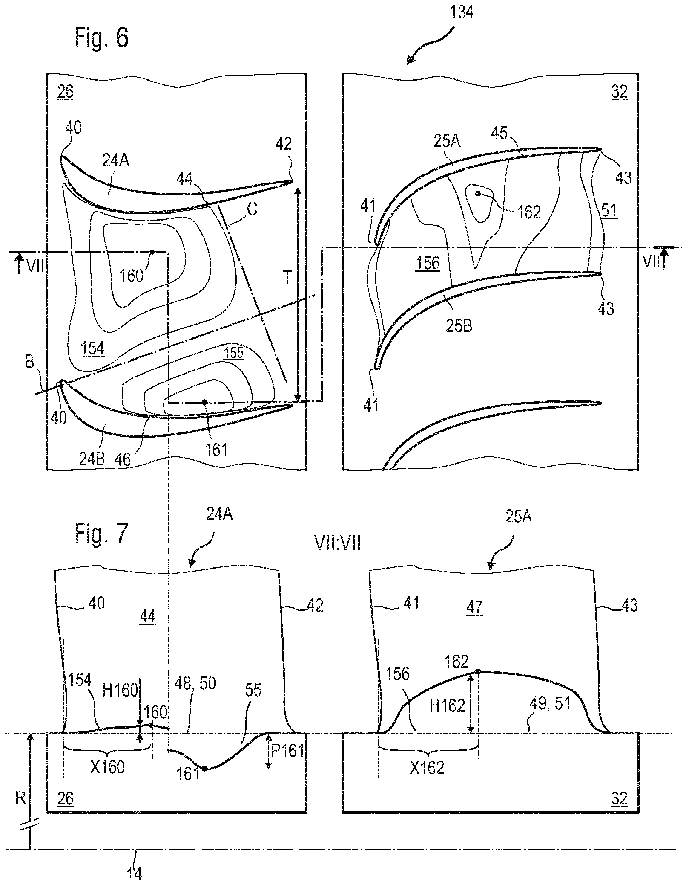

La portion non-axisymétrique 52 du support rotorique 26 comprend une ou plusieurs bosse(s) et/ou un ou plusieurs creux. La portion non-axisymétrique 53 du support 32 comprend une ou plusieurs bosse(s) et/ou un ou plusieurs creux. Ces surfaces non-axisymétriques 52, 53 sont illustrées de manière schématique sur la figure 3. Deux modes de réalisation de l'invention (figures 4 et 6) illustrent ceci de manière plus précise.

La surface de liaison 48, 49, l'extrados d'une aube 24A, 25A et l'intrados d'une aube directement circonférentiellement adjacente 24B, 25B, définissent un passage inter-aubes respectif.

La corde des aubes, qui est identique pour toutes les aubes d'une rangée d'aubes donnée, est notée CR (corde rotorique) et CS (corde statorique). La corde est un segment qui s'étend du bord d'attaque au bord de fuite.

La figure 4 est identique à la figure 3 mais est déchargée de la plupart des numéros de référence pour en améliorer la clarté. La figure 4 se concentre sur les portions non-axisymétriques 52, 53 selon un premier mode de réalisation.

On y observe en particulier les lignes de niveaux qui marquent les variations radiales des bosses 54, 56 et des creux 55, 57 par rapport à la portion axisymétrique 50, 51. Pour plus de clarté, seul un espace inter-aubes est représenté avec ces bosses et creux mais les motifs sont répétés régulièrement circonférentiellement autour de l'axe 14, pour tout ou partie des espaces inter-aubes.

Sur le support 26, la bosse 54 et le creux 55 se situent de part et d'autre d'une ligne A reliant le bord d'attaque 40 de l'aube 24B au bord de fuite 42 de l'aube 24A, la ligne A étant située du côté intrados de l'aube 24B. La ligne A peut former sensiblement un axe d'antisymétrie pour la bosse 54 et le creux 55.

La bosse 54 a un sommet 60 matérialisant le point de la bosse 54 le plus éloigné radialement de la surface axisymétrique 50. Le creux 55 a un fond 61 matérialisant le point du creux 55 le plus éloigné radialement de la surface axisymétrique 50.

Il en est de même pour le support statorique 32 : la bosse 56 a un sommet 62 matérialisant le point de la bosse 56 le plus éloigné radialement de la surface axisymétrique 51. Le creux 57 a un fond 63 matérialisant le point du creux 57 le plus éloigné radialement de la surface axisymétrique 51.

Dans l'exemple de la figure 4, la bosse 54 s'étend circonférentiellement sensiblement du bord d'attaque 40 de l'aube 24A au bord d'attaque de l'aube 24B - c'est-à-dire qu'elle occupe au moins 80% ou au moins 90% de la distance inter-aube (notée T sur la figure 6) au voisinage des bords d'attaque 40. La bosse 54 s'étend également sur la majeure partie de l'extrados 44 de l'aube 24A, c'est-à-dire plus de 50% de l'extrados 44, et dans l'exemple précis de la figure 4, plus de 90% de l'extrados 44. Elle est accolée à l'extrados 44 de l'aube 24A et le sommet 60 peut être au voisinage, voire au contact de l'extrados 44.

Le creux 55 s'étend circonférentiellement sur environ 75% de la distance inter-aubes et s'étend le long de l'intrados 46 de l'aube 24B sur environ la moitié aval de l'aube 24B. Il est accolé à l'intrados 46 de l'aube 24B et le fond 61 peut être au voisinage, voire au contact de l'intrados 46.

Côté support statorique 32, la bosse 56 s'étend substantiellement d'un bord d'attaque 41 à l'autre et axialement le long de l'intrados 47 de l'aube 25A. La bosse 56 peut s'étendre autour du bord de fuite 43.

Le creux 57 est situé environ au milieu de l'espace inter-aubes, c'est-à-dire à équidistance des aubes 25A et 25B.

La figure 5 illustre une vue en coupe de l'étage 34 de la figure 4 selon l'axe segmenté V:V défini en figure 4.

Dans cet exemple, la surface axisymétrique 50, 51 est un cylindre de rayon R mais les enseignements de la présente invention s'appliquent également pour d'autres surfaces axisymétriques.

La hauteur des sommets 60, 62 est notée H60 et H62. La profondeur des fonds 61, 63 est notée P61 et P63.

Dans ce premier mode de réalisation, la hauteur H60 est plus grande que la profondeur P61, en valeur absolue et la hauteur H62 est plus grande que la profondeur P63, en valeur absolue.

Soit ER l'extrémum rotorique correspondant à la plus grande des valeurs absolues de la hauteur radiale H60 du sommet 60 et de la profondeur radiale P61 du fond 61 des portions non-axisymétriques 52 de la surface de liaison rotorique (48). Soit ES l'extrémum statorique correspondant à la plus grande des valeurs absolues de la hauteur radiale H62 du sommet 62 et de la profondeur radiale P63 du fond 63 des portions non-axisymétriques 53 de la surface de liaison statorique 49. On a dans ce cas ER=H60 et ES=H62.

Selon l'invention, ER/ES ou ES/ER est compris entre 40% et 60%.

Selon l'invention, ER vaut entre 4 et 8% de la corde CR de ses aubes 24.

Selon un mode avantageux, ES vaut entre 4 et 8% de la corde CS de ses aubes 25.

Sur le mode de réalisation des figures 4 et 5, le ratio ES/ER vaut entre 40% et 60%.

En termes de valeurs de ces extrémums, ER peut être par exemple compris entre 2 et 4 mm et ES peut être compris entre 0,8 et 2,4 mm. Bien entendu, ces valeurs ne sont que des exemples et sont à rapprocher des dimensions générales (hauteur, longueur axiale et épaisseur) des aubes 24, 25.

La position axiale des sommets 60, 62 et des fonds 61, 63 relativement à une ligne moyenne des bords d'attaque 40, 41 est notée X60, X61, X62, X63.

Selon un mode de réalisation optionnel de l'invention, la position relative X60, X61, X62, X63 des sommets 60, 62 et/ou des fonds 61, 63 est sensiblement identique, proportionnellement aux cordes (CR, CS, voir figure 3) : X60/CR ≈ X62/CS et/ou X61/CR ≈ X63/CS. Ces ratios peuvent être compris, pour ce qui est des sommets 60, 62, entre 15% et 40%, préférentiellement environ 25%, et pour ce qui est des fonds 61, 63, entre 60% et 80%.

Les figures 6 et 7 illustrent un second mode de réalisation de l'invention d'un étage 134 de compresseur. Les éléments identiques au premier mode de réalisation conservent leurs numéros de référence. Les éléments distincts sont incrémentés de 100 par comparaison aux figures 4 et 5. Dans les paragraphes qui suivent, les figures 6 et 7 sont décrites ensemble.

Dans cet exemple, la bosse 154, qui s'étend sensiblement d'un bord d'attaque à l'autre a pour sommet 160 et le creux 155 a pour fond 161. La profondeur P161 du creux 155 est plus grande (en valeur absolue) que la hauteur H160 de la bosse 154. Ainsi, l'extrémum rotorique ER vaut IP1611.

Le support statorique 32 ne comprend dans cet exemple qu'une bosse 156 et pas de creux. Le sommet 162 est à une hauteur H 162 au-dessus de la surface 51. ES vaut donc H162.

Comme l'illustre schématiquement la figure 7, le rapport ER/ES vaut environ 55%.

Dans cet exemple aussi, les ratios X160/CR et X162/CS sont voisins et valent environ 25%.

La notation T matérialise la distance inter-aubes. Dans cet exemple, le creux occupe circonférentiellement au maximum 25% de cette distance et la bosse en occupe au moins la moitié. Le creux s'étend dans la moitié aval du support statorique.

Une ligne théorique B matérialise un couloir entre la bosse 154 et le creux 155, le couloir étant une portion axisymétrique. La ligne théorique C matérialise la terminaison aval de la bosse et du creux. Dans cet exemple, les lignes B et C sont sensiblement perpendiculaires. Les risques de turbulence en sortie de rotor sont ainsi réduits.

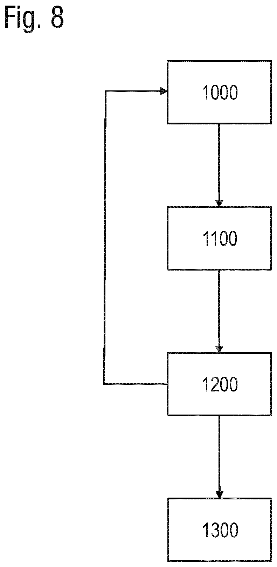

La figure 8 illustre un exemple d'étapes d'un procédé qui peut être suivi pour déterminer la géométrie du stator et du rotor de façon optimale. Des splines dessinant les bosses et/ou creux inter-aubes sont définies à l'étape 1000 au moyen de paramètres, comme par des coordonnées de points clés des splines. Une étape de simulation de l'écoulement est effectuée à l'étape 1100. À l'étape 1200, les résultats de la simulation sont analysés et comparés à des résultats de précédentes simulations. Si les résultats sont en deçà d'un indicateur donné, de nouveaux paramètres sont définis et une nouvelle simulation est effectuée. Finalement, à l'étape 1300, des paramètres satisfaisants et les courbes correspondantes sont retenus. Le procédé peut comprendre une étape de fabrication d'un étage de compresseur correspondant à la géométrie simulée.

Dans la présente demande, les termes « creux » et « bosse » sont employés par facilité pour qualifier toute géométrie allant respectivement radialement en-deçà ou au-delà d'une géométrie nominale. Ces termes sont donc synonymes de « dépression » et « élévation ».

## Revendications

1. Étage (34, 134) de compresseur (4 ; 6) de turbomachine (2), notamment un compresseur basse-pression (4) de turbomachine, l'étage (34) comprenant :
- un support rotorique (26) et une rangée annulaire d'aubes rotoriques (24) s'étendant radialement extérieurement depuis le support rotorique (26), le support rotorique (26) définissant une surface de liaison rotorique (48) entre deux aubes rotoriques (24A, 24B) circonférentiellement adjacentes ;
- un support statorique (32) et une rangée annulaire d'aubes statoriques (25) s'étendant radialement extérieurement depuis le support statorique (32), le support statorique (32) définissant une surface de liaison statorique (49) entre deux aubes statoriques (25A, 25B) circonférentiellement adjacentes ;
la rangée annulaire d'aubes statoriques (25) étant positionnée directement en aval de la rangée annulaire d'aubes rotoriques (24) ;
les surfaces de liaison (48, 49) étant chacune pourvues de portions axisymétriques (50, 51) et de portions non-axisymétriques (52, 53), ces dernières (52, 53) comprenant une bosse (54, 56, 154, 156) et/ou un creux (55, 57, 155) entre deux aubes (24A, 24B, 25A, 25B) circonférentiellement adjacentes, chaque bosse (54, 56) ayant un sommet (60, 62) à une hauteur radiale (H60, H62) relativement à la portion axisymétrique (50, 51) et chaque creux (55, 57) ayant un fond (61, 63) à une profondeur radiale (P61, P63) relativement à la portion axisymétrique (50, 51), l'étage (34) comprenant un extrémum rotorique (ER) correspondant à la plus grande des valeurs absolues de la hauteur radiale (H60) du sommet (60) et de la profondeur radiale (P61) du fond (61) des portions non-axisymétriques (52) de la surface de liaison rotorique (48) ; et l'étage (34) comprend un extrémum statorique (ES) correspondant à la plus grande des valeurs absolues de la hauteur radiale (H62) du sommet (62) et de la profondeur radiale (P63) du fond (63) des portions non-axisymétriques (53) de la surface de liaison statorique (49), la valeur de l'extrémum statorique (ES) étant d'environ 40% à 60% de la valeur de l'extrémum rotorique (ER) ou la valeur de l'extrémum rotorique (ER) étant d'environ 40% à 60% de la valeur de l'extrémum statorique (ES),
**caractérisé en ce que** la valeur de l'extrémum rotorique (ER) est comprise entre 4 et 8% de la corde (CR) des aubes rotoriques (24).

2. Étage (34, 134) de compresseur selon la revendication 1, **caractérisé en ce que** le sommet (60, 160) de la bosse (54, 154) du support rotorique (26) et le sommet (62, 162) de la bosse (56, 156) du statorique (32) sont agencés à une distance axiale (X60, X62, X160, X162) des bords d'attaques (40, 41) des aubes (24, 25) respectives comprise entre 25 et 50% de la corde (CR, CS) des aubes respectives (24, 25), préférentiellement les distances axiales (X60, X62, X160, X162) des sommets (60, 62, 160, 162) des bosses (54, 56, 154, 156) du support rotorique (26) et du support statorique (32) par rapport aux bords d'attaque (40, 41) respectifs sont égales en proportion de la corde (CR, CS) des aubes respectives (24, 25).

3. Étage (34, 134) selon l'une des revendications 1 ou 2, **caractérisé en ce que** le creux (55, 155) du support rotorique (26) est accolé à l'intrados (46) d'une aube rotorique (24B) et dispose d'un fond (61, 161) positionné axialement à une distance du bord d'attaque (40) de l'aube rotorique (24B) d'environ 75% de la corde (CR) des aubes rotoriques (24).

4. Étage (34, 134) selon l'une des revendications 1 à 3, **caractérisé en ce que** la bosse (54, 154) du support rotorique (26) est accolée à l'extrados (44) d'une aube rotorique (24A).

5. Étage (34, 134) selon l'une des revendications 1 à 4, **caractérisé en ce que** la bosse (54, 154) du support rotorique (26) s'étend sensiblement d'un bord d'attaque (40) d'une aube rotorique (24A) au bord d'attaque (40) d'une aube rotorique (24B) circonférentiellement adjacente.

6. Étage (34, 134) selon l'une des revendications 1 à 5, **caractérisé en ce que** la bosse (56, 156) du support statorique (32) est accolée à l'intrados (45) d'une aube statorique (25A) et s'étend axialement sur au moins 75%, préférentiellement sur 100%, de la corde (CS) des aubes statoriques (25), le sommet (62, 162) de cette bosse étant préférentiellement accolé à l'intrados (45) de l'aube statorique (25A).

7. Étage (34, 134) selon l'une des revendications 1 à 6, **caractérisé en ce que** la valeur de l'extrémum statorique (ES) est comprise entre 4 et 8% de la corde (CS) des aubes statoriques (25) et les extrémums (ER, ES) valent préférentiellement environ 6% de la corde respective.

8. Étage (34) selon l'une des revendications 1 à 7, **caractérisé en ce que** le support rotorique (26) comprend exactement une bosse (54) et exactement un creux (55), disposés de part et d'autre d'une ligne théorique (A) reliant le bord d'attaque (40) d'une aube (24B) donnée et le bord de fuite (42) d'une aube (24A) circonférentiellement adjacente à, et du côté intrados (46) de ladite aube donnée (24B).

9. Étage (34) selon la revendication 8, **caractérisé en ce que** le creux (57) du support statorique (32) est disposé circonférentiellement à équidistance environ de deux aubes (25A, 25B) circonférentiellement adjacentes, et préférentiellement axialement à une distance (X63) des bords d'attaque (41) des aubes statoriques (25) d'environ 75% de la corde (CS) des aubes statoriques (25).

10. Étage (134) selon l'une des revendications 1 à 7, **caractérisé en ce que** le support statorique (32) est dépourvue de creux et comprend une bosse (156) disposée circonférentiellement environ à équidistance de deux aubes (25A, 25B) circonférentiellement adjacentes.

11. Étage (134) selon l'une des revendications 1 à 7 ou 10, **caractérisé en ce que** la bosse (156) du support statorique (32) s'étend de l'extrados (47) d'une aube (25B) jusqu'à l'intrados (45) d'une aube (25A) circonférentiellement adjacente.

12. Étage (134) selon l'une des revendications 1 à 7, 10 ou 11, **caractérisé en ce que** le creux (155) du support rotorique (26) s'étend circonférentiellement sur environ un quart de la distance inter-aubes (T).

13. Étage (134) selon l'une des revendications 1 à 7 ou 10 à 12, **caractérisé en ce que** la hauteur radiale (H160) du sommet (160) de la bosse (154) du support rotorique (26) vaut entre 40 et 60% de la profondeur (P161) du fond (161) du creux (155) du support rotorique (26), qui elle-même mesure entre 40 et 60% de la hauteur radiale (H162) du sommet (162) de la bosse (156) du support statorique (32), en valeurs absolues.

## Patentansprüche

1. Stufe (34, 134) eines Verdichters (4; 6) einer Turbomaschine (2), insbesondere eines Niederdruckverdichters (4) einer Turbomaschine, wobei die Stufe (34) Folgendes umfasst:
- einen Rotorträger (26) und eine ringförmige Reihe von Rotorschaufeln (24), die sich von dem Rotorträger (26) radial nach außen erstrecken, wobei der Rotorträger (26) eine Rotorverbindungsfläche (48) zwischen zwei in Umfangsrichtung benachbarten Rotorschaufeln (24A, 24B) definiert;
- einen Statorträger (32) und eine ringförmige Reihe von Statorschaufeln (25), die sich von dem Statorträger (32) radial nach außen erstrecken, wobei der Statorträger (32) eine Statorverbindungsfläche (49) zwischen zwei in Umfangsrichtung benachbarten Statorschaufeln (25A, 25B) bildet;
wobei die ringförmige Reihe von Statorschaufeln (25) direkt stromabwärts der ringförmigen Reihe von Rotorschaufeln (24) angeordnet ist;
die Verbindungsflächen (48, 49) jeweils mit achsensymmetrischen Abschnitten (50, 51) und nicht-achsensymmetrischen Abschnitten (52, 53) versehen sind, wobei letztere (52, 53) einen Höcker (54, 56, 154, 156) und/oder einen Hohlraum (55, 57, 155) zwischen zwei in Umfangsrichtung benachbarten Schaufeln (24A, 24B, 25A, 25B) umfassen,
wobei jeder Höcker (54, 56) eine Oberseite (60, 62) in einer radialen Höhe (H60, H62) in Bezug auf den achsensymmetrischen Abschnitt (50, 51) aufweist und jeder Hohlraum (55, 57) einen Boden (61, 63) in einer radialen Tiefe (P61, P63) in Bezug auf den achsensymmetrischen Abschnitt (50, 51) aufweist, wobei die Stufe (34) ein Rotorextremum (RE) aufweist, das dem größeren der absoluten Werte der radialen Höhe (H60) des Oberteils (60) und der radialen Tiefe (P61) des Bodens (61) der nicht-achsensymmetrischen Abschnitte (52) der Rotorverbindungsfläche (48) entspricht; und die Stufe (34) ein Statorextremum (SE) umfasst, das dem größeren der absoluten Werte der radialen Höhe (H62) der Oberseite (62) und der radialen Tiefe (P63) der Unterseite (63) der nicht-achsensymmetrischen Abschnitte (53) der Statoranschlussfläche (49) entspricht, wobei der Wert des Statorextremums (SE) ungefähr 40% bis 60% des Wertes des Rotorextremums (RE) beträgt oder der Wert des Rotorextremums (RE) ungefähr 40% bis 60% des Wertes des Statorextremums (SE) beträgt,
**dadurch gekennzeichnet, dass** der Wert des Rotorextremums (RE) zwischen 4 und 8% der Sehne (CR) der Rotorschaufeln (24) liegt.

2. Stufe (34, 134) eines Verdichters nach Anspruch 1, **dadurch gekennzeichnet, dass** die Oberseite (60, 160) des Höckers (54, 154) des Rotorträgers (26) und die Oberseite (62, 162) des Höckers (56, 156) des Stators (32) in einem axialen Abstand (X60, X62, X160, X162) von den Vorderkanten (40, 41) der jeweiligen Schaufeln (24, 25) von zwischen 25 und 50% der Sehne (CR, CS) der jeweiligen Schaufeln (24, 25) angeordnet sind, vorzugsweise sind die axialen Abstände (X60, X62, X160, X162) der Oberseiten (60, 62, 160, 162) der Höcker (54, 56, 154, 156) des Rotorträgers (26) und des Statorträgers (32) von den jeweiligen Vorderkanten (40, 41) im Verhältnis zur Sehne (CR, CS) der jeweiligen Schaufeln (24, 25) gleich.

3. Stufe (34, 134) nach einem der Ansprüche 1 oder 2, **dadurch gekennzeichnet, dass** der Hohlraum (55, 155) des Rotorträgers (26) an der Druckfläche (46) einer Rotorschaufel (24B) befestigt ist und eine Basis (61, 161) aufweist, die axial in einem Abstand von der Vorderkante (40) der Rotorschaufel (24B) von etwa 75% der Sehne (CR) der Rotorschaufeln (24) angeordnet ist.

4. Stufe (34, 134) nach einem der Ansprüche 1 bis 3, **dadurch gekennzeichnet, dass** der Höcker (54, 154) des Rotorträgers (26) an der Saugfläche (44) einer Rotorschaufel (24A) befestigt ist.

5. Stufe (34, 134) nach einem der Ansprüche 1 bis 4, **dadurch gekennzeichnet, dass** sich der Höcker (54, 154) des Rotorträgers (26) im Wesentlichen von einer Vorderkante (40) einer Rotorschaufel (24A) zur Vorderkante (40) einer in Umfangsrichtung benachbarter Rotorschaufel (24B) erstreckt.

6. Stufe (34, 134) nach einem der Ansprüche 1 bis 5, **dadurch gekennzeichnet, dass** der Höcker (56, 156) des Statorträgers (32) an der Druckfläche (45) einer Statorschaufel (25A) befestigt ist und sich axial über mindestens 75 %, vorzugsweise über 100 %, der Sehne (CS) der Statorschaufeln (25) erstreckt, wobei die Spitze (62, 162) dieses Höckers vorzugsweise an der Druckfläche (45) der Statorschaufel (25A) befestigt ist.

7. Stufe (34, 134) nach einem der Ansprüche 1 bis 6, **dadurch gekennzeichnet, dass** der Wert des Statorextremums (SE) zwischen 4 und 8% der Sehne (CS) der Statorschaufeln (25) liegt und die Extrema (RE, SE) vorzugsweise etwa 6% der jeweiligen Sehne ausmachen.

8. Stufe (34) nach einem der Ansprüche 1 bis 7, **dadurch gekennzeichnet, dass** der Rotorträger (26) genau einen Höcker (54) und genau eine Vertiefung (55) aufweist, die auf beiden Seiten einer theoretischen Linie (A) angeordnet sind, die die Vorderkante (40) einer bestimmten Rotorschaufel (24B) und die Hinterkante (42) einer Rotorschaufel (24A) in Umfangsrichtung neben und auf der Druckfläche (46) der bestimmten Schaufel (24B) verbindet.

9. Stufe (34) nach Anspruch 8, **dadurch gekennzeichnet, dass** der Hohlraum (57) des Statorträgers (32) in Umfangsrichtung in etwa gleichem Abstand von zwei in Umfangsrichtung benachbarten Statorschaufeln (25A, 25B) und vorzugsweise axial in einem Abstand (X63) von den Vorderkanten (41 ) der Statorschaufeln (25) von etwa 75% der Sehne (CS) der Statorschaufeln (25) angeordnet ist.

10. Stufe (134) nach einem der Ansprüche 1 bis 7, **dadurch gekennzeichnet, dass** der Statorträger (32) frei von Vertiefungen ist und einen Höcker (156) aufweist, der in Umfangsrichtung in etwa gleichem Abstand zu zwei in Umfangsrichtung benachbarten Statorschaufeln (25A, 25B) angeordnet ist.

11. Stufe (134) nach einem der Ansprüche 1 bis 7 oder 10, **dadurch gekennzeichnet, dass** sich der Höcker (156) des Statorträgers (32) von der Saugfläche (47) einer Schaufel (25B) zur Druckfläche (45) einer in Umfangsrichtung benachbarten Schaufel (25A) erstreckt.

12. Stufe (134) nach einem der Ansprüche 1 bis 7, 10 oder 11, **dadurch gekennzeichnet, dass** sich der Hohlraum (155) des Rotorträgers (26) in Umfangsrichtung über etwa ein Viertel des Schaufelabstands (T) erstreckt.

13. Stufe (134) nach einem der Ansprüche 1 bis 7 oder 10 bis 12, **dadurch gekennzeichnet, dass** die radiale Höhe (H160) der Oberseite (160) des Höckers (154) des Rotorträgers (26) zwischen 40 und 60% der Tiefe (P161) des Bodens (161) der Vertiefung (155) des Rotorträgers (26) beträgt, die ihrerseits zwischen 40 und 60% der radialen Höhe (H162) der Oberseite (162) des Höckers (156) des Statorträgers (32) misst, in Absolutwerten.

## Claims

1. Stage (34, 134) of a compressor (4; 6) of a turbomachine (2), in particular a low-pressure compressor (4) of a turbomachine, the stage (34) comprising:
- a rotor support (26) and an annular row of rotor blades (24) extending radially outwardly from the rotor support (26), the rotor support (26) defining a rotor connecting surface (48) between two circumferentially adjacent rotor blades (24A, 24B) ;
- a stator support (32) and an annular row of stator blades (25) extending radially outwardly from the stator support (32), the stator support (32) defining a stator connecting surface (49) between two circumferentially adjacent stator blades (25A, 25B);
the annular row of stator blades (25) being positioned directly downstream of the annular row of rotor blades (24);
the connecting surfaces (48, 49) each being provided with axisymmetric portions (50, 51) and non-axisymmetric portions (52, 53), the latter (52, 53) comprising a bump (54, 56, 154, 156) and/or a hollow (55, 57, 155) between two circumferentially adjacent blades (24A, 24B, 25A, 25B),
each bump (54, 56) having a top (60, 62) at a radial height (H60, H62) relative to the axisymmetric portion (50, 51) and each hollow (55, 57) having a bottom (61, 63) at a radial depth (P61, P63) relative to the axisymmetric portion (50, 51), the stage (34) comprising a rotor extremum (RE) corresponding to the greater of the absolute values of the radial height (H60) of the top (60) and the radial depth (P61) of the bottom (61) of the non-axisymmetric portions (52) of the rotor connecting surface (48); and the stage (34) comprising a stator extremum (SE) corresponding to the greater of the absolute values of the radial height (H62) of the top (62) and the radial depth (P63) of the bottom (63) of the non-axisymmetric portions (53) of the stator connection surface (49), the value of the stator extremum (SE) being approximately 40% to 60% of the value of the rotor extremum (RE) or the value of the rotor extremum (RE) being approximately 40% to 60% of the value of the stator extremum (SE),
**characterised in that** the value of the rotor extremum (RE) is between 4 and 8% of the chord (CR) of the rotor blades (24).

2. Stage (34, 134) of a compressor according to claim 1, **characterised in that** the top (60, 160) of the bump (54, 154) of the rotor support (26) and the top (62, 162) of the bump (56, 156) of the stator (32) are arranged at an axial distance (X60, X62, X160, X162) from the leading edges (40, 41) of the respective blades (24, 25) of between 25 and 50% of the chord (CR, CS) of the respective blades (24, 25), preferably the axial distances (X60, X62, X160, X162) of the tops (60, 62, 160, 162) of the bumps (54, 56, 154, 156) of the rotor support (26) and of the stator support (32) from the respective leading edges (40, 41) are equal in proportion to the chord (CR, CS) of the respective blades (24, 25).

3. Stage (34, 134) according to one of claims 1 or 2, **characterised in that** the hollow (55, 155) of the rotor support (26) is attached to the inside surface (intrados) (46) of a rotor blade (24B) and has a base (61, 161) positioned axially at a distance from the leading edge (40) of the rotor blade (24B) of approximately 75% of the chord (CR) of the rotor blades (24).

4. Stage (34, 134) according to one of claims 1 to 3, **characterised in that** the bump (54, 154) of the rotor support (26) is attached to the outside surface (extrados) (44) of a rotor blade (24A).

5. Stage (34, 134) according to one of claims 1 to 4, **characterized in that** the bump (54, 154) of the rotor support (26) extends substantially from a leading edge (40) of a rotor blade (24A) to the leading edge (40) of a circumferentially adjacent rotor blade (24B).

6. Stage (34, 134) according to one of claims 1 to 5, **characterised in that** the bump (56, 156) of the stator support (32) is attached to the inside surface (intrados) (45) of a stator blade (25A) and extends axially over at least 75%, preferably over 100%, of the chord (CS) of the stator blades (25), the top (62, 162) of this bump being preferably attached to the inside surface (intrados) (45) of the stator blade (25A).

7. Stage (34, 134) according to one of claims 1 to 6, **characterised in that** the value of the stator extremum (SE) is between 4 and 8% of the chord (CS) of the stator blades (25) and the extremums (RE, SE) are preferably worth approximately 6% of the respective chord.

8. Stage (34) according to one of claims 1 to 7, **characterised in that** the rotor support (26) comprises exactly one bump (54) and exactly one hollow (55), arranged on either side of a theoretical line (A) connecting the leading edge (40) of a given blade (24B) and the trailing edge (42) of a blade (24A) circumferentially adjacent to, and on the inside surface (intrados) (46) of said given blade (24B).

9. Stage (34) according to claim 8, **characterised in that** the hollow (57) of the stator support (32) is arranged circumferentially approximately equidistant from two circumferentially adjacent blades (25A, 25B), and preferably axially at a distance (X63) from the leading edges (41 ) of the stator blades (25) of approximately 75% of the chord (CS) of the stator blades (25).

10. Stage (134) according to one of claims 1 to 7, **characterised in that** the stator support (32) is devoid of hollows and comprises a bump (156) arranged circumferentially approximately equidistant from two circumferentially adjacent blades (25A, 25B).

11. Stage (134) according to one of claims 1 to 7 or 10, **characterised in that** the bump (156) of the stator support (32) extends from the outside surface (extrados) (47) of a blade (25B) to the inside surface (intrados) (45) of a circumferentially adjacent blade (25A).

12. Stage (134) according to one of claims 1 to 7, 10 or 11, **characterised in that** the hollow (155) of the rotor support (26) extends circumferentially over approximately a quarter of the inter-blade distance (T).

13. Stage (134) according to one of claims 1 to 7 or 10 to 12, **characterised in that** the radial height (H160) of the top (160) of the bump (154) of the rotor support (26) is between 40 and 60% of the depth (P161 ) of the bottom (161) of the hollow (155) of the rotor support (26), which itself measures between 40 and 60% of the radial height (H162) of the top (162) of the bump (156) of the stator support (32), in absolute values.
